# EUROPÄISCHE PATENTSCHRIFT

(11) **EP 1 767 474 B1**
(45) Veröffentlichungstag und Bekanntmachung des Hinweises auf die Patenterteilung: **27.01.2010**
(21) Anmeldenummer: 06020112.6
(22) Anmeldetag: 26.09.2006
(51) Int. Cl.: B65G 47/244, B65B 35/58

(54) **Vorrichtung zum Handhaben von Gegenständen, wie Kartons**
Handling device for articles such as cardboard boxes
Dispositif de maniement pour articles tels que cartons

(30) Priorität: 27.09.2005 DE 202005015268 U
(43) Veröffentlichungstag der Anmeldung: 28.03.2007
(73) Patentinhaber: Krones AG, 93073 Neutraubling (DE)
(72) Erfinder: Schlieper, Ulrich, 93191 Rettenbach (DE)

(56) Entgegenhaltungen:
- EP-A- 0 761 573
- WO-A-01/51390

## Beschreibung

Die Erfindung bezieht sich auf eine Vorrichtung zum Handhaben von Gegenständen der im Oberbegriff von Anspruch 1 erläuterten Art.

Eine aus der DE 103 01 178 A1

bekannte Vorrichtung dient zum Ausrichten und Verteilen von in mindestens einer Reihe antransportierten Gegenständen, die zueinander jeweils den gleichen Abstand aufweisen. Zu diesem Zweck ist eine Greifereinrichtung vorgesehen, die eine Vielzahl von Mitnehmerstäben umfasst, an denen einzelne Greifer befestigt sind. Die Mitnehmerstäbe sind mit ihren beiden Enden an jeweils einer Kette eines Kettenantriebs befestigt. Jede Kette läuft endlos in jeweils einem Förderelementgestell um und wird durch einen Motor angetrieben. Dadurch ist jedoch die Bewegungsmöglichkeit der Mitnehmerstäbe beschränkt, wobei sich beispielsweise der Abstand zwischen zwei aufeinanderfolgenden Mitnehmerstäben nicht verändern kann und sich die beiden Mitnehmerstäbe auch nicht mit unterschiedlichen Geschwindigkeiten bewegen können.

Eine weitere Vorrichtung zum Handhaben von Gegenständen ist aus der W02004/039705 bekannt. Diese Druckschrift beschreibt eine Greifeinrichtung mit einer Mehrzahl von Greiferköpfen, die an einem Träger hängend angeordnet sind und sich sowohl quer als auch parallel zur Förderrichtung und in senkrechter Richtung dazu bewegen können. Wie die Greifelemente angetrieben werden, ist nicht erwähnt. Es wird jedoch ausführlich beschrieben, dass es für eine bestimmungsgemäße Funktion der Greiferköpfe notwendig ist, die Gegenstände vor dem Einlauf in die Greiferköpfe exakt zu takten, was durch die Feststellung der Geschwindigkeit des oder der Förderbänder und die Lokalisierung des Gegenstandes und eine Anpassung der Geschwindigkeit geschieht, so dass die Gegenstände sich anschließend in einer vorbestimmten Position zum Einlaufen in die Greifeinrichtung befinden.

Aus EP 0 761 573 B1 ist eine Vorrichtung mit den Merkmalen des Oberbegriffs des Anspruchs 1 zum Einstellen von Zwischenräumen von Gütern bekannt, die auf einem Förderband herangebracht werden. Mit Hilfe von Greifern, die jeweils auf autonom antreibbaren Schlitten gelagert sind, ist ein flexibles Einstellen von gewünschten Zwischenräumen möglich, ohne formatabhängige Förderschnecken mit einem starren Teilungsmaß vorhalten und austauschen zu müssen. Diese Vorrichtung ist allerdings nicht zum Erzeugen von Lagenbildern einsetzbar, wie das beispielsweise zum gruppenweisen Verpacken oder schichtweisen Palettieren von Gütern benötigt wird.

Der Erfindung liegt somit die Aufgabe zugrunde, eine Vorrichtung zum Handhaben von Gegenständen bereitzustellen, die auf konstruktiv einfache Weise einen größeren Spielraum bei der Handhabung von Gegenständen hat.

Die Aufgabe wird durch die im Anspruch 1 angegebenen Merkmale gelöst.

Durch den erfindungsgemäß verwendeten Selbstfahrträger zum Bewegen des Greifers kann flexibel und ohne Umrüstbedarf auf die unterschiedlichsten Anforderungen beim Handhaben von Gegenständen reagiert werden. So können beispielsweise die unterschiedlichsten Handhabungsarten von Gegenständen verwirklicht werden, also Verschieben, Drehen, Gruppieren, Sortieren, oder dgl. Weiterhin wird der erfindungsgemäß verwendete Selbstfahrträger mit den unterschiedlichsten Betriebsvoraussetzungen fertig, wobei beispielsweise mit unterschiedlichen Geschwindigkeiten und/oder unterschiedlichen Abständen ankommende Gegenstände oder selbst chaotisch verteilt zulaufende Gegenstände von einem oder mehreren Förderern problemlos in die gewünschte Ordnung gebracht werden können. Zur Erkennung der zulaufenden Gegenstände können geeignete Sensoren oder Kameras vorgesehen werden, deren Signale zur Ansteuerung der Selbstfahrträger und der Greifer verwertet werden.

Erfindungsgemäß ist auf dem Selbstfahrträger auch eine motorische Antriebseinrichtung mit einem Querantrieb zum Bewegen des Greifers in Querrichtung angeordnet.

Kann der Greifer eine Mehrzahl von Bewegungen ausführen, so sind bevorzugt alle Antriebe dieser Bewegungen auf dem Selbstfahrträger untergebracht.

Der Selbstfahrträger läuft in einer Führung, und insbesondere einer Umlaufführung, die dem Förderer der Gegenstände zugeordnet ist.

Vorteilhafte Weiterbildungen sind den Unteransprüchen zu entnehmen.

Von besonderem Vorteil ist es, wenn die Greifeinrichtung eine Vielzahl von Selbstfahrträgern enthält, die unabhängig voneinander bewegbar sind. Mit einer derartigen Greifeinrichtung können eine Vielzahl von Gegenständen gleichzeitig aber in unterschiedlichen Richtungen zueinander und/oder mit unterschiedlichen Geschwindigkeiten und/oder in unterschiedlichen Handhabungsarten (Verschieben oder Drehen usw.) bewegt werden, so dass die für die Handhabung einer Vielzahl von Gegenständen erforderliche Zeit entscheidend verringert werden kann.

Jeder Selbstfahrträger verfügt über einen eigenen Fahrmotor beispielsweise einen herkömmlichen Elektromotor. Der Elektromotor kann als Schritt- oder Servomotor ausgebildet sein. Für den Antrieb der Selbstfahrträger sind aber auch Linearmotoren denkbar.

Mit einem Greifer können sowohl einzelne als auch mehrere Gegenstände gleichzeitig erfasst und manipuliert werden.

Ein Ausführungsbeispiel der Erfindung wird nachfolgend anhand der Zeichnungen näher erläutert. Es zeigen:
- Fig. 1: eine perspektivische, schematische Darstellung einer erfindungsgemäßen Vorrichtung,
- Fig. 2: die Seitenansicht der Vorrichtung nach Fig. 1,

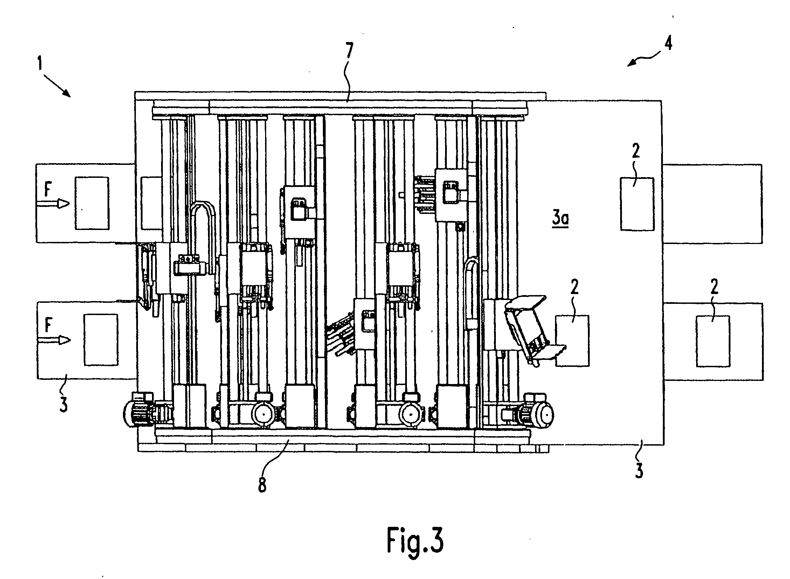

- Fig. 3: die Draufsicht auf eine Vorrichtung gemäß Fig. 1,
- Fig. 4: eine perspektivische Darstellung eines Selbstfahrträgers, und
- Fig. 5: die Seitenansicht des Selbstfahrträgers nach Fig. 4.

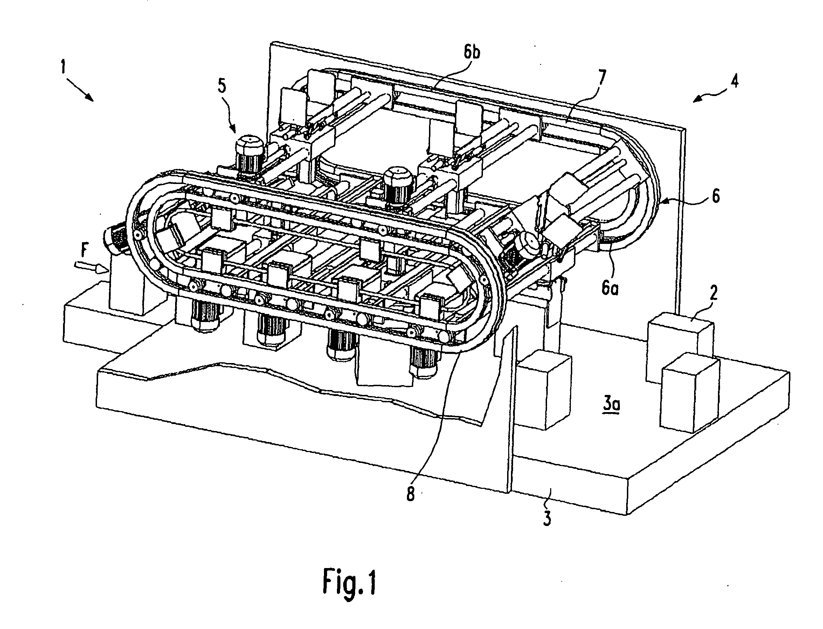

Fig. 1 zeigt in schematischer, perspektivischer Darstellung eine Vorrichtung 1 zum Handhaben von Gegenständen. Die erfindungsgemäße Vorrichtung eignet sich besonders zur Lagenvorbereitung vor Verpackungsmaschinen, wie beispielsweise Palettierer oder dgl. Die Gegenstände sind im dargestellten Ausführungsbeispiel quaderförmige Kartons.

Die Vorrichtung 1 enthält einen Förderer 3 für die Gegenstände 2 und eine Greifereinrichtung 4.

Der Förderer 3 kann jede der zum Fördern der bestimmten Gegenstände geeignete Fördereinrichtung enthalten und ist im dargestellten Ausführungsbeispiel ein Förderband. Der Förderer 3 kann ein gemeinsames oder mehrere Fördereinrichtungen (Förderbänder) enthalten, wobei diese jedoch bevorzugt im Bereich der Greifereinrichtung 4 eine fluchtend ausgerichtete Förderfläche 3a für die Gegenstände 2 bilden. Vor oder nach der Greifereinrichtung kann der Förderer 3 sich in die unterschiedlichsten Fördereinrichtungen aufspalten, wobei die Zahl der einlaufenden Fördereinrichtungen (Förderbänder) von der Zahl der auslaufenden Fördereinrichtungen (Förderbänder) abweichend sein kann.

Auf dem Förderer 3 werden die Gegenstände 2 in Förderrichtung F unter der Greifereinrichtung 4 hindurchgefördert. Die Anordnung und/oder der Abstand zwischen den Gegenständen 2 beim Einlauf unter die Greifeinrichtung 4 ist beliebig.

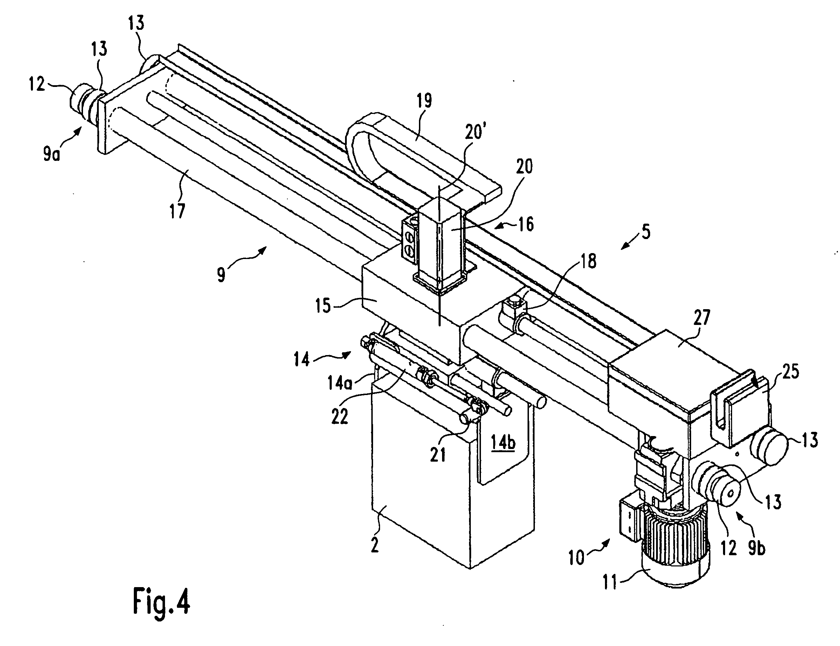

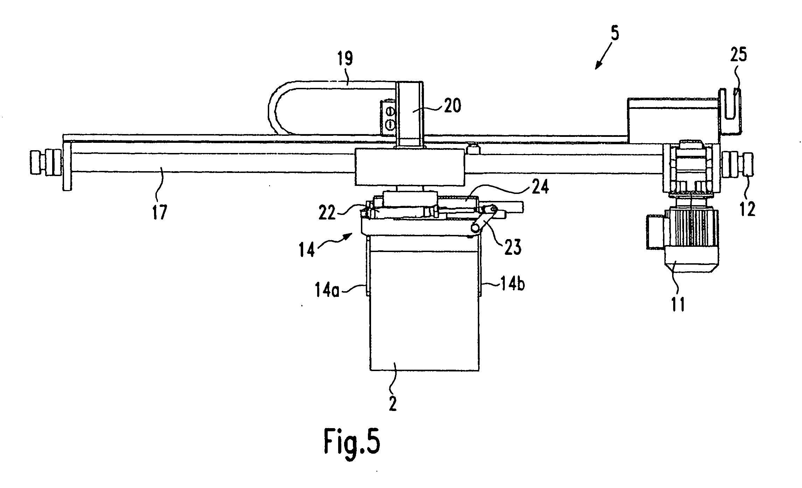

Die Greifeinrichtung 4 enthält wenigstens einen, bevorzugt eine Vielzahl von Selbstfahrträgern 5, die in den Fig. 4 und 5 näher dargestellt sind. Die Selbstfahrträger 5 laufen in einer Führung 6, die im dargestellten Ausführungsbeispiel als Umlaufführung ausgebildet ist und einen Wirkbereich 6a enthält, der den Selbstfahrträger 5 parallel zum Förderer 3 führt. Die Führung 6 enthält weiterhin einen Rückkehrbereich 6b, über den der Selbstfahrträger 5 an einen Ausgangspunkt beim Einlaufen des Förderers 3 in die Greifereinrichtung 4 zurückkehren kann.

Die Führung 6 enthält zwei Umlaufschienen 7 und 8, die endlos mit den beiden Bereichen 6a, 6b ausgebildet sind und sich beidseitig des Förderers und oberhalb des Förderers 3 befinden. Dabei ist der Wirkbereich 6a in der Nähe des Förderers 3 und der Rückkehrbereich 6b im Wesentlichen senkrecht darüberliegend angeordnet.

Alle Selbstfahrträger 5 der Greifereinrichtung 4 sind im Wesentlichen identisch ausgebildet. Der Selbstfahrträger 5 enthält, wie die Fig. 4 und 5 zeigen, eine langgestreckte Brücke 9 mit zwei freien Enden 9a, 9b, mit denen die Brücke 9 in jeweils einer der Schienen 7 bzw. 8 geführt ist. Auf diese Weise erstreckt sich die Brücke 9 quer zur Förderrichtung F über den Förderer 3 und im Wesentlichen parallel zur Förderfläche 3a, wenn sich der Selbstfahrträger 5 im Wirkbereich 6a befindet.

Der Selbstfahrträger 5 trägt seinen eigenen motorischen Fahrantrieb 10 mit einem Motor 11 und einem Antriebselement 12, das vom Motor 11 angetrieben wird. Das Antriebselement 12 ist beispielsweise ein Zahnrad, das in entsprechende Zähne in der Führung 6 (z.B. eine Zahnstange) eingreifen kann und den Selbstfahrträger 5 in Längsrichtung parallel zur Förderrichtung F antreibt. Zweckmäßigerweise sind an beiden freien Enden 9a, 9b jeweils ein Antriebselement 12 vorgesehen, die von einem gemeinsamen Motor 11 über eine innenliegende Welle angetrieben werden. An beiden freien Enden sind weiterhin Laufrollen 13 vorgesehen, die parallel und in Richtung der Förderrichtung F beabstandet sind und ein Verkippen des Selbstfahrträgers 5 verhindern. Der Motor 11 kann das Antriebselement 12 mit unterschiedlichen Geschwindigkeiten, stufenlos oder in Stufen veränderbar, antreiben und ist ggfs. umschaltbar.

Auf dem Selbstfahrträger 5 ist weiterhin wenigstens ein Greifer 14 angeordnet. Der Greifer 14 ist zwischen den freien Enden 9a, 9b des Selbstfahrträgers 5 in Querrichtung, d.h. quer zur Förderrichtung F bewegbar. Dies wird im dargestellten Ausführungsbeispiel dadurch gelöst, dass der Greifer 14 an einem Schlitten 15 hängt, der mit Hilfe eines Querantriebes 16 auf einer Führung 17, dargestellt ist eine Gleitstange, verschiebbar ist. Der Querantrieb 16 für den Greifer 14 enthält im dargestellten Ausführungsbeispiel einen Motor 18 und eine Schleppkette 19, kann jedoch andere geeignete Antriebseinrichtungen enthalten.

Der Greifer 14 enthält weiterhin einen Drehantrieb 20, mit dem der Greifer 14 um eine im Wesentlichen senkrecht zur Förderfläche 3a verlaufende Drehachse 20' verdreht werden kann. Der Drehantrieb 20 enthält ebenfalls einen Motor.

Der Greifer 14 kann jede bekannte Konstruktion aufweisen, die sich zum Handhaben der bestimmten Gegenstände 2 eignet. Im vorliegenden Ausführungsbeispiel ist der Greifer 14 an die Handhabung quaderförmiger Gegenstände 2, beispielsweise Kartons, angepasst und enthält zwei Klappen 14a, 14b, von denen wenigstens eine, im dargestellten Ausführungsbeispiel die Klappe 14b, um eine horizontale Schwenkachse 21 verschwenkbar ist, so dass der Gegenstand 2 ohne zeitaufwendige Manipulation aus dem Greifer 14 auslaufen kann, wenn der Gegenstand 2 so auf die Förderfläche 3a gesetzt wird, dass die schwenkbare Klappe 14b vorn liegt.

Zur Betätigung des Greifers 14 ist ein erster Betätigungsantrieb 22 vorgesehen, der über ein Hebelgetriebe 23 die Klappe 14b öffnet und schließt. Es ist ein zweiter Betätigungsantrieb 24 vorgesehen, mit dem der Greifabstand zwischen den beiden Klappen 14a, 14b eingestellt werden kann. Die beiden Betätigungsantriebe 22 und 24 sind bevorzugt als elektrisch betätigbare Antriebe ausgebildet.

Im dargestellten Ausführungsbeispiel sind alle Antriebseinrichtungen für den Greifer 14 auf dem Selbstfahrträger 5 untergebracht und mit ihm verfahrbar.

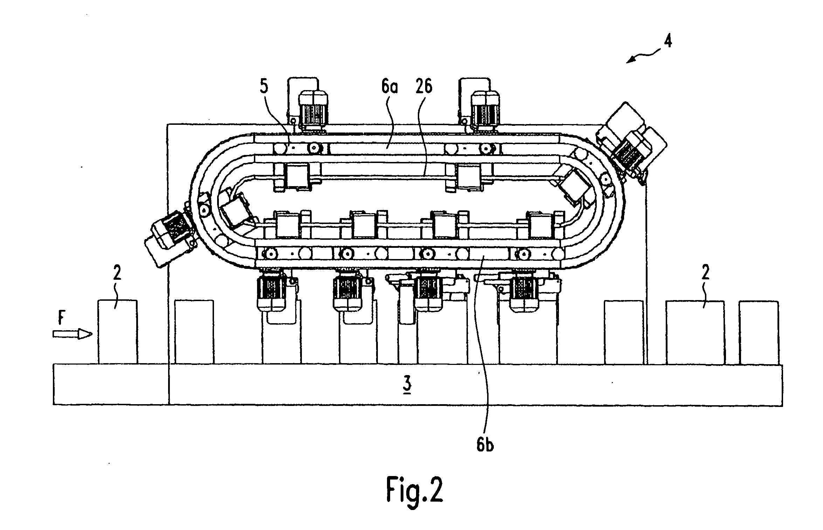

Die Stromversorgung der Antriebseinrichtungen auf dem Selbstfahrträger 5 erfolgt bevorzugt über einen Schleifkontakt 25, der am Selbstfahrträger 5 angeordnet ist. Der Schleifkontakt 25 wirkt mit einer Stromschiene 26 (Fig. 2) zusammen, die der Führung 6 zugeordnet ist. Auf dem Selbstfahrträger ist weiterhin ein Schaltkasten 27 angeordnet.

Der erfindungsgemäße Vorrichtung 1 ist eine nicht gezeichnete Steuerung zugeordnet. Die Steuerung ist mit jedem der Selbstfahrträger 5 in geeigneter Weise derart verbunden, dass sich der Selbstfahrträger 5 unabhängig und beliebig über die Förderfläche 3a nach einem programmierbaren Muster bewegen kann, also beispielsweise mit variablen Geschwindigkeiten, ggfs. auch vor und zurück in Längsrichtung bewegbar ist. Durch die Steuerung werden weiterhin die Antriebseinrichtungen für den Greifer unabhängig voneinander und unabhängig vom Fahrantrieb des Selbstfahrträgers 5, ebenfalls nach einem programmierbaren Muster betätigt. Enthält die Greifereinrichtung 4 eine Mehrzahl von Selbstfahrträgern 5, so können die Selbstfahrträger unabhängig voneinander und nach einem programmierbaren Muster bewegt werden. Durch die Steuerung können weiterhin die verschiedenen Antriebseinrichtungen der Greifer der Selbstfahrträger 5 unabhängig von den Greifern anderer Selbstfahrträger 5 der Greifereinrichtung 4 nach einem programmierbaren Muster betätigt werden.

Der Steuerung wird bevorzugt die Position der in die Greifereinrichtung 4 einlaufenden Gegenstände 2 vorgegeben, entweder als Signale einer vorangegangenen Maschine oder festgestellt durch eine Sensoreinrichtung oder dgl. Die Steuerung enthält weiterhin eine Einrichtung, mit der die gegenwärtige, tatsächliche Position des Selbstfahrträgers 5 bzw. aller Selbstfahrträger 5 einer Greifereinrichtung 4 feststellbar ist.

In Abwandlung der beschriebenen und gezeichneten Konstruktion kann die Führung 6 mit einer nicht gezeichneten Ausschleuseinrichtung versehen sein, mit der Selbstfahrträger aus der Greifereinrichtung 5 ausgeschleust oder in diese eingebracht werden können. Statt oder in Ergänzung eines elektrischen Antriebs für die Antriebseinrichtungen des Greifers bzw. den Fahrantrieb des Selbstfahrträgers können pneumatische Antriebe vorgesehen sein, wobei auf dem Selbstfahrträger zusätzlich ein Druckluftkompressor angeordnet ist.

Mit der erfindungsgemäßen Vorrichtung können zulaufende Gebinde 2 verteilt und gleichzeitig gedreht werden, z.B. zur Bildung eines verschachtelten Lagenbilds oder zur Sortierung. Der Zulauf kann 1-, 2- oder 3-bahnig, der Ablauf mehrbahnig bis hin zu z.B. 8 Bahnen sein. Die Spurmasse ist dabei frei programmierbar. Der Zulauf von Gebinden kann mit gleicher Laufrichtung/ Orientierung oder gemischt sein, wobei die Laufrichtung mittels Sensorik erkannt werden kann. Die Drehung erfolgt standardmäßig 90° in eine Richtung, es ist jedoch auch möglich 90° rechtsherum, 90° linksherum und 180°, z.B. zur Etikettenausrichtung, oder mit komplett frei programmierbarem Drehwinkel zu drehen.

Über einem breitem Gebindeförderer 3 (z.B. mit Mattenkette) werden auf beiden Seiten ovale in Längsrichtung umlaufende Schienen 7, 8 aufgebaut. Auf diesen Schienen kann ein Selbstfahrträger 5 rundum laufen. Auf dem Selbstfahrträger 5 ist ein Greifer 14 angebracht, der die zulaufenden Gebinde greift. Hierbei sind alle Arten von Greifern denkbar (seitlich klemmen von 2 oder von 4 Seiten, Ansaugen, von oben absenkbare Haube). Der Greifer ist durch einen Antrieb seitlich verschiebbar und durch einen anderen Antrieb drehbar. Die Weite des Greifers kann auf verschiedene Gebindegrößen (Breite und Länge) eingestellt werden. Der Greifer kann beim Erfassen eines Gebindes dieses klemmen. Um nach dem Drehen ein Gebinde wieder auslaufen zu lassen, kann die Klappe 14b geöffnet werden, der Greifer könnte aber auch seitlich oder nach oben wegfahren. Der mit dem Greifer versehene Selbstfahrträger kann mit frei zu programmierender Geschwindigkeit auf der umlaufenden Führung fahren, so dass er das zu behandelnde Gebinde in dessen Förderrichtung begleitet. Im Einlauf werden die Gebinde durch eine Sensorik erkannt und auf dem Förderer nachverfolgt. Ein Selbstfahrträger mit Greifer beschleunigt auf die Gebindegeschwindigkeit und synchronisiert seine Position mit der des Gebindes und greift dieses. Danach wird entsprechend der Programmvorgabe das Gebinde gedreht, seitlich verschoben und wieder losgelassen. Über ein parallel zur Führung verlaufendes Wegmesssystem bekommt die Steuerung Rückmeldung, an welcher Stelle der Schiene sich der Selbstfahrträger befindet.

Am Umfang der umlaufenden Führung sind mehrere unabhängige Selbstfahrträger mit Greifern verteilt, so dass für jedes einlaufende Gebinde ein Selbstfahrträger zur Verfügung steht. Die Gebinde müssen zwar mit Lücke zulaufen, aber nicht mit einer fest vorgegebenen Teilung. Diese Gebindeteilung kann chaotisch sein, die selbstfahrenden Träger gleichen diese aus. Es muss nur ein gewisser Mindestabstand zwischen den Gebinden eingehalten werden. Die Anzahl der umlaufenden Selbstfahrträger wird entsprechend der Gebindegröße und der Verarbeitungsleistung gewählt.

Werden kleine Gebinde mit kleiner Gebindeteilung verarbeitet, sind viele Selbstfahrträger im unteren Teil der umlaufenden Führung im Eingriff und wenige Selbstfahrträger fahren oben ohne Gebinde schnell zum Einlauf zurück.

Werden große Gebinde mit großer Gebindeteilung verarbeitet sind wenige Selbstfahrträger im unteren Teil der Führung im Eingriff und viele Selbstfahrträger fahren oben langsam zum Einlauf zurück.

Werden die Gebinde im Einlauf mehrbahnig zugeführt, fahren die Greifer schon vorher auf die entsprechende seitliche Position. Es ist auch denkbar, dass auf einem Selbstfahrträger zwei oder mehrere Greifer nebeneinander angebracht sind, die unabhängig von einander seitlich verfahren können. Dabei würde ein Selbstfahrträger zwei oder mehrere Gebinde gleichzeitig verarbeiten.

Die Selbstfahrträger werden über eine berührungslose Energieübertragung und aufmoduliertem Signal mit Energie und Signalen versorgt. Dies kann über einen umlaufenden Linienleiter und U-förmigen oder flachen Abnehmern erfolgen. Auch denkbar ist die Energieversorgung mit Schleifkontaktschienen und die Signalversorgung über Funk oder WLAN. Einen möglichst kleinen Elektroschaltkasten mit Frequenzumrichtern, Regeln, usw. hat jeder Selbstfahrträger an Bord. Da nicht immer alle Antriebe gleichzeitig in Funktion sind, können sich evtl. zwei oder mehr Antriebe einen Frequenzumrichter teilen um die bewegten Massen gering zu halten.Der Antrieb der Selbstfahrträger auf den Schienen kann auch mittels Reibrädern etc erfolgen. Der Antrieb zum seitlichen Verfahren des Greifers und der Antrieb zum Einstellen der Greiferweite und zum Zufassen auf das Gebinde kann z.B. ein Linearmotor oder umlaufender Zahnriemen und Rotationsantrieb sein. Alternativ zum Öffnen der Klappe kann ein Anheben und Absenken des Greifers mit eigenem Antrieb vorgesehen sein.

Bei mehrbahnigem Zulauf ist die Vorrichtung auch als Zusammenführung auf eine oder zwei Bahnen, als Ausgleichsweiche zum "Überkreuz"-Verteilen oder dann einsetzbar, wenn z.B. zwischen zwei Zulaufbahnen und/oder zwei Auslaufbahnen mit jeweils variierenden Durchsatzleistungen ausgeglichen werden muss. Eine zentrale Höhenverstellung des gesamten Systems ist denkbar. Eine Höhenverstellung kann auch in jeden Greifer integriert werden. An geeigneter Stelle, z.B. seitlich im Einlauf, kann ein Wechselplatz zum automatischen/ halbautomatischen/ manuellen Austausch der Greiferköpfe vorgesehen sein für sehr unterschiedliche Gebindeabmaße, die nicht mit einem Greifer abgedeckt werden können, der auch zur Wartung nutzbar ist. Weiterhin kann ein Bahnhof zur Speicherung von einzelnen Selbstfahrträgern vorgesehen werden, um bei verschiedenen Gebindegrößen/ Leistungen/ Produktionszuständen etc. unterschiedlich viele Selbstfahrträger aktiv im Einsatz zu haben, der auch zur durchwechselnden Wartung der Selbstfahrträger nutzbar ist.

Die Erfindung hat folgende weitere Vorteile:
- Hohe Durchsatzleistung bei geringer Gebindebeschleunigung möglich. Es muss kein leerer Rückhub mit den Greifern gemacht werden, der die Leistung drückt.
- Für das Verteilen und Drehen des Gebindes steht relativ viel Zeit zur Verfügung, da der Vorgang auf einer längeren Strecke stattfindet und mehrere Greifer gleichzeitig im Eingriff sind. Dadurch gebindeschonend.
- Spurmasse, Drehwinkel, Verteilschema, etc. komplett frei programmierbar. Sehr flexibel.
- Gebinde müssen nicht auf eine bestimmte Teilung fest eingetaktet werden wie bei anderen Systemen mit umlaufenden Greifern.
- Geringer Platzbedarf, besonders im Hochleistungsbereich. Hier müssten sonst zwei oder mehr Systeme hintereinander platziert werden, was sehr lang baut.

## Patentansprüche

1. Vorrichtung (1) zum Handhaben von Gegenständen (2), mit einem in einer Förderrichtung (F) bewegbaren Förderer (3) zum Anliefern der Gegenstände (2), und einer Greifereinrichtung (4) mit wenigstens einem Greifer (14), der zum Handhaben der Gegenstände (2) bewegbar ist, wobei die Greifereinrichtung (4) wenigstens einen in einer Führung (6) laufenden Selbstfahrträger (5) enthält, auf dem wenigstens ein Greifer (14) und ein motorischer Fahrantrieb (10) zum Bewegen des Selbstfahrträgers (5) in Längsrichtung bezüglich der Förderrichtung (F) angeordnet sind, **dadurch gekennzeichnet, dass** auf dem Selbstfahrträger (5) eine Antriebseinrichtung (16, 20, 22, 24) zum Bewegen des Greifers (14) angeordnet ist, die einen Querantrieb (16) zum Bewegen des Greifers (14) in Querrichtung bezüglich der Förderrichtung (F) enthält.

2. Vorrichtung nach Anspruch 1, **dadurch gekennzeichnet, dass** der Greifer (14) um eine Achse (20') drehbar ist und die Antriebseinrichtung einen Drehantrieb (20) enthält.

3. Vorrichtung nach einem der Ansprüche 1 oder 2, **dadurch gekennzeichnet, dass** der Greifer (14) betätigbare Greifelemente (14a, 14b) aufweist und die Antriebseinrichtung einen Betätigungsantrieb (22, 24) enthält.

4. Vorrichtung nach einem der Ansprüche 1 bis 3, **dadurch gekennzeichnet, dass** die Führung (6) wenigstens eine oberhalb des Förderers (3) angeordnete Umlaufschiene (7, 8) mit einem parallel zur Förderrichtung (F) verlaufenden Wirkbereich (6a) und einem Rückführbereich (6b) enthält.

5. Vorrichtung nach einem der Ansprüche 1 bis 4, **dadurch gekennzeichnet, dass** der Selbstfahrträger (5) eine langgestreckte, im Wesentlichen horizontal verlaufende Brücke (9) mit zwei freien Enden (9a, 9b) umfasst, die jeweils in einer Umlaufschiene (7, 8) geführt sind.

6. Vorrichtung nach Anspruch 5, **dadurch gekennzeichnet, dass** wenigstens ein freies Ende (9a) der Brücke (9) mit einem Antriebselement (12) des Fahrantriebs (10) des Selbstfahrträgers (5) versehen ist.

7. Vorrichtung nach einem der Ansprüche 1 bis 6, **dadurch gekennzeichnet, dass** der Greifer (14) auf einem Schlitten (15) angeordnet ist, der in einer Führung (17) auf dem Selbstfahrträger (5) läuft.

8. Vorrichtung nach einem der Ansprüche 1 bis 7, **dadurch gekennzeichnet, dass** der Greifer (14) mit Greifklappen (14a, 14b) versehen ist.

9. Vorrichtung nach einem der Ansprüche 1 bis 7, **dadurch gekennzeichnet, dass** die Antriebseinrichtung eine kabellose Energieversorgung (25, 26) umfasst.

10. Vorrichtung nach Anspruch 9, **dadurch gekennzeichnet, dass** auf dem Selbstfahrträger (5) ein Stromabnehmer (25) angeordnet ist.

11. Vorrichtung nach einem der Ansprüche 1 bis 10, **dadurch gekennzeichnet, dass** auf dem Selbstfahrträger (5) ein Schaltkasten (27) angeordnet ist.

12. Vorrichtung nach einem der Ansprüche 1 bis 11, **dadurch gekennzeichnet, dass** der Fahrantrieb (10) und/oder die Antriebseinrichtung einen pneumatischen Antrieb enthält und auf dem Selbstfahrträger (5) ein Druckluftkompressor angeordnet ist.

13. Vorrichtung nach einem der Ansprüche 1 bis 12, **dadurch gekennzeichnet, dass** die Greifeinrichtung (4) eine Mehrzahl unabhängig voneinander bewegbarer Selbstfahrträger (5) umfasst.

14. Vorrichtung nach Anspruch 13, **dadurch gekennzeichnet, dass** die Mehrzahl von Selbstfahrträgern (5) in einer gemeinsamen Führung (6) laufen.

15. Vorrichtung nach einem der Ansprüche 1 bis 14, **dadurch gekennzeichnet, dass** eine Ausschleuseinrichtung zum Ausschleusen des Selbstfahrträgers (5) aus der Führung (6) vorgesehen ist.

16. Vorrichtung nach einem der Ansprüche 1 bis 15, **dadurch gekennzeichnet, dass** eine Steuerungseinrichtung für eine programmierbare Bewegung des Greifers (14) und des Selbstfahrträgers (5) vorgesehen ist.

## Claims

1. Device (1) for handling articles (2) with a conveyer (3), which may move in a conveying direction (F) to supply the articles (2), and a gripper device (4) with at least one gripper (14), which may move to handle the articles (2), in which the gripper device (4) contains at least one automotive carrier (5) running in a guide (6), on which at least one gripper (14) and one motor driven travelling mechanism (10) for moving the automotive carrier (5) in a longitudinal direction with reference to the conveying direction (F) are arranged, **characterised in that** a drive device (16, 20, 22, 24) for moving the gripper (14) is arranged on the automotive carrier (5), which contains a cross drive (16) to move the gripper (14) in a crosswise direction with reference to the conveying direction (F).

2. Device according to claim 1, **characterised in that** the gripper (14) may turn around an axis (20') and the drive device contains a turning drive (20).

3. Device according to one of claims 1 or 2, **characterised in that** the gripper (14) has gripping elements (14a, 14b), which may be actuated, and the drive device contains an actuating drive (22, 24).

4. Device according to one of claims 1 to 3, **characterised in that** the guide (6) contains at least one circulating rail (7, 8) arranged above the conveyer (3) with an active area (6a) running parallel to the conveying direction (F) and a return area (6b).

5. Device according to one of claims 1 to 4, **characterised in that** the automotive carrier (5) comprises an elongated bridge (9) running essentially horizontally with two free ends (9a, 9b), which are guided in a circulating rail (7, 8).

6. Device according to claim 5, **characterised in that** at least one free end (9a) of the bridge (9) is provided with a drive element (12) of the travelling mechanism (10) of the automotive carrier (5).

7. Device according to one of claims 1 to 6, **characterised in that** the gripper (14) is arranged on a carriage (15), which runs in a guide (17) on the automotive carrier (5).

8. Device according to one of claims 1 to 7, **characterised in that** the gripper (14) is provided with gripping flaps (14a, 14b).

9. Device according to one of claims 1 to 7, **characterised in that** the drive device comprises a cableless power supply (25, 26).

10. Device according to claim 9, **characterised in that** a current collector (25) is arranged on the automotive carrier (5).

11. Device according to one of claims 1 to 10, **characterised in that** a switch box (27) is arranged on the automotive carrier (5).

12. Device according to one of claims 1 to 11, **characterised in that** the travelling mechanism (10) and/or the drive device contains a pneumatic drive and a compressed air compressor is arranged on the automotive carrier (5).

13. Device according to one of claims 1 to 12, **characterised in that** the gripper device (4) comprises a plurality of automotive carriers (5), which may move independently of each other.

14. Device according to claim 13, **characterised in that** the plurality of automotive carriers (5) run in a common guide (6).

15. Device according to one of claims 1 to 14, **characterised in that** a removal device is provided for removing the automotive carrier (5) from the guide (6).

16. Device according to one of claims 1 to 15, **characterised in that** a control device is provided for moving the gripper (14) and the automotive carrier (3) in a way which may be programmed.

## Revendications

1. Dispositif pour manipuler des objets (2) comprenant un convoyeur (3) mobile dans une direction de convoyage (F) pour fournir les objets et une installation à pince(s) (4) ayant au moins une pince (14) mobile pour manipuler les objets (2),
l'installation à pince(s) (4) comportant au moins une barre automotrice (5) circulant dans un chemin de guidage (6), et partout au moins une pince (14) et un moyen d'entraînement à moteur (10) pour déplacer la barre automotrice (5) dans la direction longitudinale par rapport à la direction de convoyage (F),
**caractérisé en ce que**
la barre automotrice (5) comporte une installation d'entraînement (16, 20, 22, 24) pour déplacer la pince (14), ce moyen d'entraînement ayant un moyen d'entraînement transversal (16) pour déplacer la pince (14) dans la direction transversale par rapport à la direction de convoyage (F).

2. Dispositif selon la revendication 1,
**caractérisé en ce que**
la pince (14) peut tourner autour d'un axe (20') et l'installation d'entraînement comporte un entraînement de rotation (20).

3. Dispositif selon l'une quelconque des revendications 1 ou 2,
**caractérisé en ce que**
la pince (14) comporte des éléments de pince (14a, 14b) et l'installation d'entraînement comporte un moyen d'entraînement d'actionnement (22, 24).

4. Dispositif selon l'une quelconque des revendications 1 à 3,
**caractérisé en ce que**
le chemin de guidage (6) comporte au moins un rail de circulation (7, 8) installé au-dessus du convoyeur (3), et ayant une plage d'action (6a) parallèle à la direction de convoyage (F) ainsi qu'une plage de retour (6b).

5. Dispositif selon l'une quelconque des revendications 1 à 4,
**caractérisé en ce que**
la barre automotrice (5) comporte un pont (9) allongé, pratiquement dans la direction horizontale et ayant deux extrémités libres (9a, 9b) guidées chacune dans un rail de circulation (7, 8).

6. Dispositif selon la revendication 5,
**caractérisé en ce qu'**
au moins une extrémité libre (9a) du pont (9) est munie d'un élément d'entraînement (12) du moyen d'entraînement de circulation (10) de la barre automotrice (5).

7. Dispositif selon l'une quelconque des revendications 1 à 6,
**caractérisé en ce que**
la pince (14) est installée sur un chariot (15) circulant dans un moyen de guidage (17) sur la barre automotrice (5).

8. Dispositif selon l'une quelconque des revendications 1 à 7,
**caractérisé en ce que**
la pince (14) est munie de deux volets de pince (14a, 14b).

9. Dispositif selon l'une quelconque des revendications 1 à 7,
**caractérisé en ce que**
l'installation d'entraînement comporte une alimentation en énergie (25, 26) sans câble.

10. Dispositif selon la revendication 9,
**caractérisé en ce que**
la barre automotrice (5) comporte un patin de contact électrique (25).

11. Dispositif selon l'une quelconque des revendications 1 à 10,
**caractérisé en ce que**
la barre automotrice (5) est équipée d'une boîte de commutation (27).

12. Dispositif selon l'une quelconque des revendications 1 à 11,
**caractérisé en ce que**
le moyen d'entraînement en déplacement (10) et/ou l'installation d'entraînement comporte(nt) un moyen d'entraînement pneumatique et la barre automotrice (5) est équipée d'un compresseur d'air.

13. Dispositif selon l'une quelconque des revendications 1 à 12,
**caractérisé en ce que**
l'installation de préhension (4) comporte plusieurs barres automotrices (5) mobiles indépendamment l'une de l'autre.

14. Dispositif selon la revendication 13,
**caractérisé en ce que**
l'ensemble des barres automotrices (5) circule dans le chemin de guidage commun (6).

15. Dispositif selon l'une quelconque des revendications 1 à 14,
**caractérisé par**
une installation d'aiguillage pour sortir la barre automotrice (5) du chemin de guidage (6).

16. Dispositif selon l'une quelconque des revendications 1 à 15,
**caractérisé en ce que**
l'installation de commande est prévue pour un mouvement programmable de pince (14) et de la barre automotrice (5).
